# NEUE EUROPÄISCHE PATENTSCHRIFT

(11) **EP 1 640 826 B2**
(45) Veröffentlichungstag und Bekanntmachung des Hinweises auf die Entscheidung über den Einspruch: **30.12.2015**
(45) Hinweis auf die Patenterteilung: 30.06.2010
(21) Anmeldenummer: 05108097.6
(22) Anmeldetag: 05.09.2005
(51) Int. Cl.: G05B 19/042, G05B 19/05

(54) **Darstellung von Prozesswerten in der Automatisierungstechnik**
Presentation of process values in automation technology
Présentation des valeurs de processus dans la technologie d'automatisation

(30) Priorität: 17.09.2004 DE 102004045240
(43) Veröffentlichungstag der Anmeldung: 29.03.2006
(73) Patentinhaber: Siemens Aktiengesellschaft, 80333 München (DE)
(72) Erfinder: Volkmann, Frank, 90475, Nürnberg (DE); Talanis, Thomas, 91336, Heroldsbach (DE); Tröster, Thomas, 91723, Dittenheim (DE)

(56) Entgegenhaltungen:
- EP-A- 1 256 861
- WO-A-01/69335
- US-A1- 2002 046 221
- US-A1- 2004 049 557
- M.BANI YOUNIS, G. FREY: "Formalization of existing PLC Programs: A Survey"[Online] 31. Juli 2003 (2003-07-31), Seiten 1-6, XP002482019 Gefunden im Internet: URL:http://www.eit.uni-kl.de/frey/papers/P DF/V173.pdf> [gefunden am 2008-05-29]

## Beschreibung

### Darstellung von Prozesswerten in der Automatisierungstechnik

Die Erfindung betrifft eine Vorrichtung, ein Verfahren und ein Computerprogrammprodukt zur Darstellung von Prozesswerten eines Automatisierungsprozesses in Form von Webseiten sowie ein Automatisierungsgerät mit einer derartigen Funktionalität.

Webtechnologien halten immer mehr Einzug in die Automatisierungswelt. In der Automatisierungstechnik werden Internettechnologien wie HTTP vermehrt zur Kommunikation mit einem Automatisierungsgerät via Internet oder Intranet eingesetzt. Hierbei werden die Automatisierungsgeräte bzw. deren Steuerungen mit einem Webserver ausgeführt, der mit einem Webbrowser wie beispielsweise dem Microsoft Internet Explorer oder Netscape darstellbare Webinhalte generiert. Auf diese Weise ist es möglich, mit einem Remote Client via Internet oder Intranet mit dem Automatisierungsgerät bzw. der Steuerung des Automatisierungsgerätes zu kommunizieren um beispielsweise Anlagen- und Prozesswerte mittels des Webbrowsers zu überwachen.

In der Automatisierungstechnik wird in der Regel eine Speicherprogrammierbare Steuerung (SPS) für Steuerungs- und Reglungsaufgaben, die mit einem Automatisierungsgerät durchgeführt werden, eingesetzt. Über analoge oder digitale Schnittstellen liest die SPS Zustandswerte wie z. B. Sensorwerte des Automatisierungsgerätes ein und steuert Aktoren wie Motoren, Relais, Hydraulik- oder Pneumatikzylinder. Um eine flexible Gestaltung dieser Steuerungs- und Regelungsaufgaben zu ermöglichen, weist eine SPS eine von einem Anwender projektierbare bzw. programmierbare Steuerungslogik auf. Die Steuerungslogik kann von dem Anwender in einer nach IEC 61131-3 spezifizierten Programmiersprache wie zum Beispiel AWL (Anweisungsliste) generiert oder modifiziert werden.

Bei Automatisierungsgeräten mit Webserverfunktionalität wird in der Regel der Webserver für den Anwender nicht sichtbar als Firmware in der SPS abgelegt, da eine Modifikation des Webservers durch den Anwender normalerweise nicht vorgesehen ist. Zur Darstellung von Prozess- oder Anlagenwerten bereitet der Webserver die von der SPS eingelesenen Werte in Form von HTML Seiten auf, die mittels eines Webbrowsers dargestellt werden können.

Der Erfindung liegt die Aufgabe zu Grunde, eine flexible Visualisierung von Prozesswerten mittels eines Webbrowsers zu ermöglichen.

Diese Aufgabe wird gemäß den Merkmalen der Patentansprüchs 1 durch eine Vorrichtung zur Steuerung eines Prozesses insbesondere in der Automatisierungstechnik gelöst mit einem ersten Speicherbereich zur Speicherung eines Webservers zur Generierung von Webseiten und einem zweiten Speicherbereich zur Speicherung einer von einem Anwender projektierbaren Steuerungslogik zur Steuerung des Prozesses, wobei der Webserver nicht direkt für den Anwender zugreifbar ist und zwischen der Steuerungslogik und dem Webserver eine Schnittstelle vorgesehen ist, über die die Generierung der Webseiten von dem Anwender durch Projektierung der Steuerungslogik beeinflussbar ist und eine dynamische Erzeugung von Webseiten aus dem Steuerungsprogramm ermöglicht ist.

Diese Aufgabe wird weiter durch ein Automatisierungsgerät mit obiger Vorrichtung gelöst.

Diese Aufgabe wird ferner durch ein Verfahren gemäß den Merkmalen der Patentansprüchs 1 zur Steuerung mindestens eines Prozesses insbesondere in der Automatisierungstechnik gelöst, bei dem mit einem Webserver, der nicht direkt für den Anwender zugreifbar ist, Webseiten aus dem Steuerungsprogramm dynamisch generiert werden und mit einer von einem Anwender projektierbaren Steuerungslogik der Prozess gesteuert wird, wobei die dynamische Generierung der Webseiten von dem Anwender durch Projektierung der Steuerungslogik über eine Schnittstelle zwischen der Steuerungslogik und dem Webserver beeinflusst wird.

Diese Aufgabe wird darüber hinaus durch ein Computerprogrammprodukt gemäß Patentansprüch 19 gelöst mit einem Webserver zur Generierung von Webseiten und einer von einem Anwender projektierbaren Steuerungslogik zur Steuerung eines Prozesses insbesondere in der Automatisierungstechnik, wobei der Webserver nicht direkt für den Anwender zugreifbar ist und zwischen der Steuerungslogik und dem Webserver eine Schnittstelle vorgesehen ist, über die die Generierung der Webseiten von dem Anwender durch Projektierung der Steuerungslogik beeinflussbar ist und eine dynamische Erzeugung von Webseiten aus dem Steuerungsprogramm ermöglicht ist.

Der Webserver zur Generierung der Webseiten und die Steuerungslogik liegen in zwei unterschiedlichen Speicherbereichen, wobei im Allgemeinen nur die Steuerungslogik für den Anwender direkt sichtbar und modifizierbar ist. Der Webserver ist wie üblich als Firmware ausgeführt und damit nicht direkt für den Anwender zugreifbar.

Durch die Schnittstelle zwischen der Steuerungslogik und dem Webserver kann jedoch indirekt von dem Anwender auf den Webserver zugegriffen werden. Dies ist z. B. dann von Vorteil, wenn der Anwender auf die Art der Darstellung von Prozesswerten einwirken will. Bei der Projektierung der Steuerungslogik kann er über die Schnittstelle Einfluss auf die von dem Webserver generierten Webseiten nehmen. Auf diese Weise kann er die Bildschirmausgabe eines Webbrowsers entsprechend seiner Bedürfnisse anpassen, ohne hierbei direkten Zugriff auf den im Allgemeinen als Firmware auf der Vorrichtung abgelegten Webserver zu haben. Er kann zum Beispiel über die Steuerungslogik bestimmte Parameter übermitteln, anhand derer ein Hintergrund für die darzustellende Webseite gewählt wird. Auf diese Art und Weise wird die Erstellung der Webseiten dynamisiert, ohne dass hierzu ein direkter Zugriff auf den Webserver durch den Anwender erfolgen muss.

Insbesondere bei einer Anwendung der erfindungsgemäßen Vorrichtung für automatisierungstechnische Aufgaben ist es zweckmäßig, dass die Vorrichtung als Speicherprogrammierbare Steuerung ausgeführt ist. Eine Speicherprogrammierbare Steuerung, auch als SPS abgekürzt, erlaubt eine flexible Lösung von Steuerungs- und Regelungsaufgaben. Die Steuerungslogik einer SPS kann zu diesem Zweck von einem Anwender in einer Programmiersprache nahezu frei programmiert werden, um individuelle automatisierungstechnische Aufgabenstellungen, wie die Ansteuerung von Aktoren oder das Auslesen und Auswerten von Sensorwerten zu realisieren.

Um Anlagenzustände oder auch Prozesszustände mit einem Remote Client zum Beispiel von einer zentralen Leitwarte aus überwachen zu können, ist es besonders vorteilhaft, die von dem Webserver generierten Webseiten zur Darstellung von Prozesszuständen und/oder Anlagenzuständen mit einem Webbrowser vorzusehen. Auf diese Weise kann ein über ein Intranet oder das Internet mit der Steuerung des Automatisierungsgerätes verbundener Rechner zur Visualisierung der Prozess- bzw. Anlagenwerte eingesetzt werden. Einzige Vorraussetzung ist die Installation eines Webbrowsers wie dem Microsoft Internet Explorer oder Netscape. Selbstverständlich kann auch jedes andere Softwareprodukt eingesetzt werden, mit dem die Darstellung von in einer Auszeichnungssprache erstellten Dokumenten möglich ist.

Neben der Visualisierung der Prozess- und/oder Anlagenzustände ist eine vorteilhafte Ausführung der erfindungsgemäßen Vorrichtung darin zu sehen, dass die von dem Webserver generierten Webseiten als Bedienoberfläche zur Modifikation von Prozess- und/oder Anlagenparametern mit einem Webbrowser vorgesehen sind. In der von dem Webbrowser dargestellten Seite können zum Beispiel die Aktorwerte des Automatisierungsgerätes verändert werden. Auf diese Weise kann von dem Remote Client mit Hilfe des Webbrowsers sogar aktiv auf den Automatisierungsprozess eingegriffen werden

Zweckmäßigerweise weist die Vorrichtung einen dritten Speicherbereich zur Speicherung in einer Auszeichnungssprache erstellter Datenmengen auf, wobei die Datenmengen von dem Anwender zur Generierung der Webseiten projektierbar sind. Dabei liegen in dem dritten Speicherbereich bereits Rohseiten, die über die Steuerungslogik und die Schnittstelle von dem Anwender noch projektiert werden. Erfindungsgemäß setzt der Anwender durch Programmierung der Steuerungslogik gewisse Parameter, anhand derer die Rohseiten modifiziert werden, um ein gewünschtes Erscheinungsbild der Webseiten zu erzielen.

Sowohl bei der Projektierung der Steuerungs- und Regelungsalgorithmen als auch bei der Projektierung der Webseiten ist es vorteilhaft, wenn die Steuerungslogik in einer nach IEC 61131-3 spezifizierten Programmiersprache, insbesondere in AWL, programmierbar ist. Bei AWL handelt es sich um eine Abkürzung für Anweisungsliste. Der Anwender kann somit innerhalb eines AWL Programms Instruktionen für die Generierung der Webseiten übermitteln, beispielsweise durch die Übergabe gewisser Parameter, anhand derer die in dem dritten Speicherbereich abgelegten Rohseiten modifiziert werden. Anstelle der Programmiersprache AWL können selbstverständlich auch andere nach IEC 61131-3 spezifizierte Programmiersprachen eingesetzt werden wie z. B. ST (Structured Text), LD (Ladder Diagram), FBD (Function Block Diagram) und SFC (Sequential Function Chart). IEC 61131-3 spezifizierte Programmiersprachen sind insbesondere zu Programmierung Speicherprogrammierbarer Steuerungen geeignet.

Um eine einfache Visualisierung von Prozesswerten mit einem auf einem Remote Client installierten Webbrowser zu ermöglichen, ist es sinnvoll, dass die Webseiten und/oder die in der Auszeichnungssprache erstellten Datenmengen im HTML Format ausgeführt sind. HTML ist eine Auszeichnungssprache, die von allen gängigen Webbrowsern interpretierbar ist.

In einer vorteilhaften Ausführungsform der Erfindung weist der Webserver zumindest ein in einer höheren Programmiersprache, insbesondere in C, programmiertes Programmmodul auf.

In einer weiteren vorteilhaften Ausführungsform weist der Webserver ein erstes Programmmodul zur Akquisition von Prozesswerten und ein zweites Programmmodul zur Generierung einer Webseite zur Visualisierung der Prozesswerte auf, wobei das zweite Programmmodul die Schnittstelle zur Steuerungslogik aufweist. Die beiden Programmmodule können hierbei zweckmäßigerweise in einer Hochsprache, insbesondere in C, programmiert werden.

Im Folgenden wird die Erfindung anhand der in den Figuren dargestellten Ausführungsbeispiele näher beschrieben und erläutert. Es zeigen:
- FIG 1: eine schematische Darstellung einer Vorrichtung zur Steuerung eines Prozesses gemäß Stand der Technik und
- FIG 2: eine schematische Darstellung einer Ausführungsform der erfindungsgemäßen Vorrichtung zur Steuerung eines Prozesses.

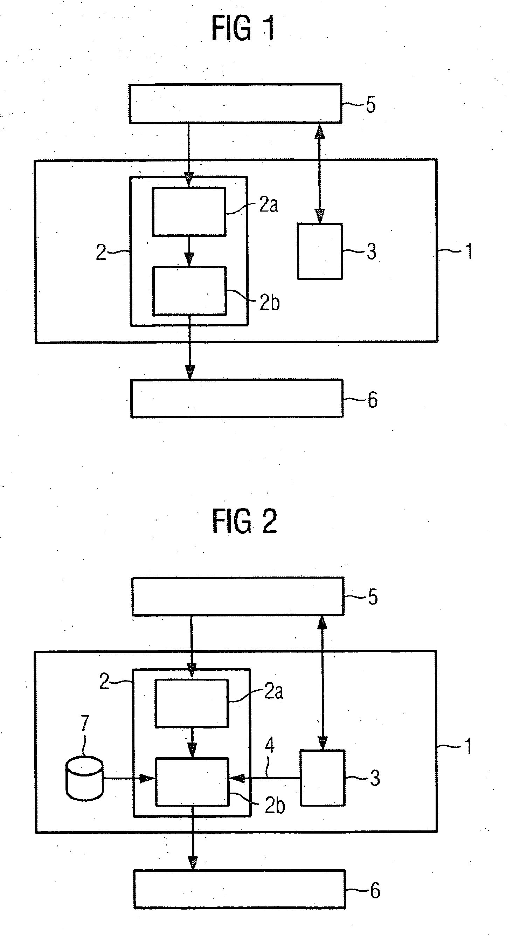

FIG 1 zeigt eine schematische Darstellung einer Vorrichtung 1 zur Steuerung eines Prozesses 5 gemäß Stand der Technik. Die Vorrichtung 1 ist als Speicherprogrammierbare Steuerung ausgeführt. Sie umfasst einen ersten Speicherbereich 2, in dem ein Webserver abgelegt ist und einen zweiten Speicherbereich 3, in dem eine von einem Anwender projektierbare Steuerungslogik abgelegt ist, die zur Steuerung und/oder Regelung eines Prozesses 5, wobei es sich insbesondere um einen Automatisierungsprozess handelt, vorgesehen ist. Die Steuerungslogik ist in der Sprache AWL programmierbar. Sie empfängt Sensorwerte des Automatisierungsprozesses 5 und setzt Aktorwerte des oder der am Automatisierungsprozess 5 beteiligten Automatisierungsgeräte.

Die Prozesswerte werden ferner von dem im zweiten Speicherbereich 2 abgelegten Webserver empfangen, der diese zu einer im HTML Format generierten Webseite aufbereitet, so dass die Prozesswerte mit einem Webbrowser 6 dargestellt werden können. Der Webserver umfasst zu diesem Zweck ein erstes in C programmiertes Programmmodul 2a, welches für das Einlesen der Prozesswerte vom Automatisierungsprozess 5 zuständig ist, und eine zweites Programmmodul 2b, welches für die Aufbereitung der Prozesswerte zu einer HTML Seite vorgehen ist.

Der zweite Speicherbereich 2 ist für den Anwender nicht sichtbar, d. h. der Webserver ist als Firmware implementiert und somit für den Anwender auch nicht beeinflussbar. Hierdurch ist der Webserver vor unzulässigen Veränderungen des Anwenders nahezu geschützt. Jedoch besteht für den Anwender hierdurch keinerlei Möglichkeit, auf die Visualisierung der Webseite Einfluss zu nehmen, um diese beispielsweise entsprechend seiner individuellen Bedürfnisse anzupassen.

FIG 2 zeigt eine schematische Darstellung einer Ausführungsform der erfindungsgemäßen Vorrichtung 1 zur Steuerung eines Prozesses 5. Die Vorrichtung 1 ist als Speicherprogrammierbare Steuerung ausgeführt. Sie umfasst einen ersten Speicherbereich 2, indem ein Webserver abgelegt ist und einen zweiten Speicherbereich 3, indem eine von einem Anwender projektierbare Steuerungslogik abgelegt ist, die zur Steuerung und/oder Regelung des Prozesses 5, wobei es sich insbesondere um einen Automatisierungsprozess handelt, vorgesehen ist. Die Steuerungslogik ist in der Sprache AWL programmierbar. Sie empfängt Sensorwerte des Automatisierungsprozesses 5 und setzt Aktorwerte des oder der am Automatisierungsprozess 5 beteiligten Automatisierungsgeräte.

Die Prozesswerte werden ferner von dem im zweiten Speicherbereich 2 abgelegten Webserver empfangen, der diese zu einer im HTML Format generierten Webseite aufbereitet, so dass die Prozesswerte mit einem Webbrowser 6 dargestellt werden können. Der Webserver umfasst zu diesem Zweck ein erstes in C programmiertes Programmmodul 2a, welches für das Einlesen der Prozesswerte vom Automatisierungsprozess 5 zuständig ist, und eine zweites Programmmodul 2b, welches für die Aufbereitung der Prozesswerte zu einer HTML Seite vorgehen ist.

Zur Aufbereitung der Prozesswerte zu den mittels des Webbrowsers 6 darstellbaren Webseiten sind in einem dritten Speicherbereich 7 Rohseiten abgelegt. Die Rohseiten dienen als Basisvorlagen für die Webseiten. Sie können zur Festlegung des endgültigen Erscheinungsbildes der Webseiten zum Beispiel durch Setzen von in den Rohseiten enthaltenden Parametern modifiziert werden. Derartige Parameter können von dem Anwender gesetzt werden.

Zu diesem Zweck ist das zweite Programmmodul 2b über eine Schnittstelle 4 mit dem zweiten Speicherbereich 2b bzw. mit der in dem zweiten Speicherbereich 2b abgelegten Steuerungslogik verbunden. Der Anwender kann so bei der Programmierung der Steuerungslogik Einfluss auf die Gestaltung der Webseiten nehmen, indem er erfindungsgemäß die in den Rohseiten enthaltenden Parameter setzt. Hierzu fügt der Anwender entsprechende AWL Instruktionen in die von ihm projektierte Steuerungslogik ein. Es wird also mit der dargestellten erfindungsgemäßen Ausführungsform der Vorrichtung eine dynamische Erzeugung von Webseiten aus dem Steuerungsprogramm bzw. der Programmiersprache AWL ermöglicht.

Mit der beschriebenen Vorrichtung hat der Anwender die Möglichkeit, auf die Gestaltung der Webseiten Einfluss zu nehmen, obwohl der eigentliche Webserver in eines für ihn nicht sichtbaren Speicherbereich liegt und somit vor Fehleingaben des Anwenders weitgehend geschützt ist.

## Patentansprüche

1. Vorrichtung (1) zur Steuerung eines Prozesses (5) insbesondere in der Automatisierungstechnik mit einem ersten Speicherbereich (2) zur Speicherung eines Webservers zur Generierung von Webseiten und einem zweiten Speicherbereich (3) zur Speicherung einer von einem Anwender projektierbaren Steuerungslogik zur Steuerung des Prozesses (5), wobei der Webserver nicht direkt für den Anwender zugreifbar ist und zwischen der Steuerungslogik und dem Webserver eine Schnittstelle (4) vorgesehen ist, über die die Generierung der Webseiten von dem Anwender durch Projektierung der Steuerungslogik beeinflusst ist und also eine dynamische Erzeugung von Webseiten aus der Steuerungslogik ermöglicht ist, wobei
die Vorrichtung (1) einen dritten Speicherbereich (7) zur Speicherung von Rohseiten aufweist, wobei die Steuerungslogik durch Setzen von Parametern zur Modifizierung der Rohseiten eingerichtet ist und damit ein gewünschtes Erscheinungsbild der Webseiten erzielt.

2. Vorrichtung (1) nach Anspruch 1,
**dadurch gekennzeichnet, dass** die Vorrichtung (1) als Speicherprogrammierbare Steuerung ausgeführt ist.

3. Vorrichtung (1) nach einem der Ansprüche 1 oder 2,
**dadurch gekennzeichnet, dass** die von dem Webserver generierten Webseiten zur Darstellung von Prozesszuständen und/oder Anlagenzuständen mit einem Webbrowser (6) vorgesehen sind.

4. Vorrichtung (1) nach einem der vorhergehenden Ansprüche,
**dadurch gekennzeichnet, dass** die von dem Webserver generierten Webseiten als Bedienoberfläche zur Modifikation von Prozess- und/oder Anlagenparametern mit dem Webbrowser (6) vorgesehen sind.

5. Vorrichtung (1) nach einem der vorhergehenden Ansprüche,
**dadurch gekennzeichnet, dass** die Vorrichtung (1) einen dritten Speicherbereich (7) zur Speicherung in einer Auszeichnungssprache erstellter Datenmengen aufweist, wobei die Datenmengen von dem Anwender zur Generierung der Webseiten projektierbar sind.

6. Vorrichtung (1) nach einem der vorhergehenden Ansprüche,
**dadurch gekennzeichnet, dass** die Steuerungslogik in einer nach IEC 61131-3 spezifizierten Programmiersprache, insbesondere in AWL, programmierbar ist.

7. Vorrichtung (1) nach einem der vorhergehenden Ansprüche,
**dadurch gekennzeichnet, dass** die Webseiten und/oder die in der Auszeichnungssprache erstellten Datenmengen im HTML Format ausgeführt sind.

8. Vorrichtung (1) nach einem der vorhergehenden Ansprüche,
**dadurch gekennzeichnet, dass** der Webserver zumindest ein in einer höheren Programmiersprache, insbesondere in C, programmiertes Programmmodul aufweist.

9. Vorrichtung (1) nach einem der vorhergehenden Ansprüche,
**dadurch gekennzeichnet, dass** der Webserver ein erstes Programmmodul (2a) zur Akquisition von Prozesswerten und ein zweites Programmmodul (2b) zur Generierung einer Webseite zur Visualisierung der Prozesswerte aufweist, wobei das zweite Programmmodul (2b) die Schnittstelle (4) zur Steuerungslogik aufweist.

10. Automatisierungsgerät mit einer Vorrichtung (1) nach einem der Ansprüche 1 bis 9.

11. Verfahren zur Steuerung mindestens eines Prozesses (5) insbesondere in der Automatisierungstechnik, bei dem mit einem Webserver, der nicht direkt für den Anwender zugreifbar ist, Webseiten aus einer Steuerungslogik dynamisch generiert werden und mit der von einem Anwender projektierbaren Steuerungslogik der Prozess (5) gesteuert wird, wobei die dynamische Generierung der Webseiten von dem Anwender durch Projektierung der Steuerungslogik über eine Schnittstelle (4) zwischen der Steuerungslogik und dem Webserver beeinflusst wird, wobei
Rohseiten vorgesehen sind und durch die Steuerungslogik durch Setzen von Parametern eine Modifizierung der Rohseiten erfolgt
und damit ein gewünschtes Erscheinungsbild der Webseiten erzielt wird.

12. Verfahren nach Anspruch 11,
**dadurch gekennzeichnet, dass** die von dem Webserver generierten Webseiten Prozesszustände und/oder Anlagenzustände darstellen.

13. Verfahren nach einem der Ansprüche 11 oder 12,
**dadurch gekennzeichnet, dass** über die von dem Webserver generierten Webseiten Prozess- und/oder Anlagenparameter mit Hilfe des Webbrowsers (6) modifiziert werden.

14. Verfahren nach einem der Ansprüche 11 bis 13,
**dadurch gekennzeichnet, dass** in einer Auszeichnungssprache erstellte Datenmengen von dem Anwender zur Generierung der Webseiten projektiert werden.

15. Verfahren nach einem der Ansprüche 11 bis 14,
**dadurch gekennzeichnet, dass** die Steuerungslogik in einer nach IEC 61131-3 spezifizierten Programmiersprache, insbesondere in AWL, programmiert wird.

16. Verfahren nach einem der Ansprüche 11 bis 15,
**dadurch gekennzeichnet, dass** die Webseiten und/oder die in der Auszeichnungssprache erstellten Datenmengen im HTML Format erstellt werden.

17. Verfahren nach einem der Ansprüche 11 bis 16,
**dadurch gekennzeichnet, dass** der Webserver zumindest ein in einer höheren Programmiersprache, insbesondere in C, programmiertes Programmmodul aufweist.

18. Verfahren nach einem der Ansprüche 11 bis 17,
**dadurch gekennzeichnet, dass** mit Hilfe eines ersten Programmmoduls (2a) des Webservers Prozesswerte akquiriert werden und mit Hilfe eines zweiten Programmmoduls (2b) des Webservers eine Webseite zur Visualisierung der Prozesswerte generiert wird, wobei das zweite Programmmodul (2b) die Schnittstelle (4) zur Steuerungslogik aufweist.

19. Computerprogrammprodukt mit einem Webserver zur Generierung von Webseiten und einer von einem Anwender projektierbaren Steuerungslogik zur Steuerung eines Prozesses (5) insbesondere in der Automatisierungstechnik, wobei der Webserver nicht direkt für den Anwender zugreifbar ist und zwischen der Steuerungslogik und dem Webserver eine Schnittstelle (4) vorgesehen ist, über die die Generierung der Webseiten von dem Anwender durch Projektierung der Steuerungslogik beeinflussbar ist und eine dynamische Erzeugung von Webseiten aus der Steuerungslogik ermöglicht ist,
in dem Rohseiten vorgesehen sind und durch die Steuerungslogik durch Setzen von Parametern eine Modifizierung der Rohseiten erfolgt und damit ein gewünschtes Erscheinungsbild der Webseiten erzielt wird.

## Claims

1. Facility (1) for controlling a process (5), especially in automation technology, with a first memory area (2) for storing a Web server for generating Web pages and a second memory area (3) for storing control logic for controlling the process (5) able to be planned into a project by a user, with the Web server not being directly accessible for the user and with there being an interface (4) between the control logic and the Web server via which the generation of the Web pages is influenced by the user by planning the control logic into the project and thus a dynamic creation of Web pages by the control logic is made possible, with the facility (1) having a third memory area (3) for storing raw pages, with the control logic being designed for modification of the raw pages by means of setting parameters and in this way a desired visual appearance of the Web pages is achieved.

2. Facility (1) according to claim 1,
**characterised in that** the facility (1) is embodied as a programmable logic control.

3. Facility (1) according to claim 1 or 2,
**characterised in that** the Web pages generated by the Web server are intended for presentation of process states and/or plant states with a Web browser (6).

4. Facility (1) according to one of the previous claims **characterised in that** the Web pages generated by the Web server are intended as an operator interface for modification of process and/or plant parameters with the Web browser (6).

5. Facility (1) according to one of the previous claims **characterised in that** the facility (1) features a third memory area (7) for storage of volumes of data created in a markup language, with the volumes of data able to be planned into the project by the user for generating the Web pages.

6. Facility (1) according to one of the previous claims **characterised in that** the control logic is able to be programmed in a programming language specified in accordance with IEC 61131-3, especially in AWL.

7. Facility (1) according to one of the previous claims **characterised in that** the Web pages and/or the volumes of data created in the markup language are entered in HTML format.

8. Facility (1) according to one of the previous claims **characterised in that** the Web server features at least one program module programmed in a high-level language, especially in C.

9. Facility (1) according to one of the previous claims **characterised in that** the Web server features a first program module (2a) for acquisition of process values and a second program module (2b) for generation of a Web page for visualisation of the process values, with the second program module (2b) featuring the interface (4) to the control logic.

10. Automation device with a facility (1) according to one of claims 1 to 9.

11. Method for controlling at least one process (5), especially in automation technology, in which Web pages are generated dynamically from a control logic with a Web server which is not directly accessible to the user and with the process (5) being controlled by the control logic planned into a project by a user, with the dynamic generation of the Web pages being influenced by the user by planning the control logic into the project via an interface (4) between the control logic and the Web server, with raw pages being provided and modification of the raw pages taking place by the control logic by means of setting parameters and in this way a desired visual appearance of the Web pages is achieved.

12. Method according to claim 11,
**characterised in that** the Web pages generated by the Web server represent process states and/or plant states.

13. Method according to one of claims 11 or 12,
**characterised in that** process parameters and/or plant parameters can be modified with the aid of the Web browser (6) via the Web pages generated by the Web server.

14. Method according to one of claims 11 to 13,
**characterised in that** the data volumes created in the markup language can be planned into the project by the user for generating the Web pages.

15. Method according to one of claims 11 to 14,
**characterised in that** the control logic is programmed in a programming language specified in accordance with IEC 61131-3, especially in AWL.

16. Method according to one of claims 11 to 15,
**characterised in that** the Web pages and or the volumes of data created in the markup language are created in HTML format.

17. Method according to one of claims 11 to 16,
**characterised in that** the Web server features at least one program module programmed in a high-level language, especially in C.

18. Method according to one of claims 11 to 17,
**characterised in that** process values are acquired with the aid of a first program module (2a) of the Web server and with the aid of a second program module (2b) of the Web server a Web page for visualising the process values is generated, with the second program module (2b) featuring the interface (4) to the control logic.

19. Computer program product with a Web server for generating Web pages and a control logic able to be planned into a project by a user for controlling a process (5), especially in automation technology, with the Web server not being directly accessible to the user and with an interface (4) being provided between the control logic and the Web server, via which the generation of the Web pages is able to be influenced by the user by planning the control logic into the project and a dynamic creation of Web pages by the control logic is made possible by raw pages being provided and modification of the raw pages taking place by the control logic by means of setting parameters and in this way a desired visual appearance of the Web pages is achieved.

## Revendications

1. Dispositif (1) de commande d'un processus (5), notamment dans la technique d'automatisation, comprenant une première zone de stockage (2) pour le stockage d'un serveur web servant à générer des pages web et une seconde zone de stockage (3) pour le stockage d'une logique de commande servant à commander le processus (5) qui peut être planifiée par un utilisateur, le serveur web n'étant pas directement accessible à l'utilisateur et une interface (4) étant prévue entre la logique de commande et le serveur web, interface par le biais de laquelle l'utilisateur influence la génération des pages web en planifiant la logique de commande et qui permet donc une génération dynamique de pages web à partir de la logique de commande, le dispositif (1) comprenant une troisième zone de stockage (7) pour le stockage de pages de brouillon, la logique de commande étant adaptée pour la modification des pages de brouillon par réglage de paramètres et parvenant ainsi à une apparence souhaitée pour les pages web.

2. Dispositif (1) selon la revendication 1, **caractérisé en ce que** le dispositif (1) est exécuté en tant que commande programmable à mémoire.

3. Dispositif (1) selon l'une des revendications 1 ou 2, **caractérisé en ce que** les pages web générées par le serveur web sont prévues pour la présentation d'états de processus et/ou d'états d'installations à l'aide d'un navigateur web (6).

4. Dispositif (1) selon l'une des revendications précédentes, **caractérisé en ce que** les pages web générées par le serveur web sont prévues en tant que surface de commande pour la modification de paramètres de processus et/ou d'installations à l'aide du navigateur web (6).

5. Dispositif (1) selon l'une des revendications précédentes, **caractérisé en ce que** le dispositif (1) comprend une troisième zone de stockage (7) pour le stockage de quantités de données rédigées dans un langage de balisage, les quantités de données pouvant être planifiées par l'utilisateur pour générer les pages web.

6. Dispositif (1) selon l'une des revendications précédentes, **caractérisé en ce que** la logique de commande peut être programmée dans un langage de programmation spécifié selon IEC 61131-3, notamment en AWL.

7. Dispositif (1) selon l'une des revendications précédentes, **caractérisé en ce que** les pages web et/ou les quantités de données rédigées dans le langage de balisage sont formatées en HTML.

8. Dispositif (1) selon l'une des revendications précédentes, **caractérisé en ce que** le serveur web comprend au moins un module de programme programmé dans un langage de programmation supérieur, notamment en langage C.

9. Dispositif (1) selon l'une des revendications précédentes, **caractérisé en ce que** le serveur web comprend un premier module de programme (2a) pour l'acquisition de valeurs de processus et un second module de programme (2b) pour la génération d'une page web afin de visualiser les valeurs de processus, le second module de programme (2b) comprenant l'interface (4) vers la logique de commande.

10. Automate programmable comprenant un dispositif (1) selon l'une des revendications 1 à 9.

11. Procédé de commande d'au moins un processus (5), notamment dans la technique d'automatisation, dans lequel des pages web sont générées dynamiquement, à partir d'une logique de commande, à l'aide d'un serveur web qui n'est pas directement accessible à l'utilisateur et le processus (5) est commandé au moyen de la logique de commande qui peut être planifiée par un utilisateur, la génération dynamique des pages web étant influencée par l'utilisateur planifiant la logique de commande par le biais d'une interface (4) entre la logique de commande et le serveur web, des pages de brouillon étant prévues et une modification des pages de brouillon se produisant, par réglage de paramètres, au moyen de la logique de commande, et une apparence souhaitée pour les pages web étant ainsi obtenue.

12. Procédé selon la revendication 11, **caractérisé en ce que** les pages web générées par le serveur web représentent des états de processus et/ou des états d'installations.

13. Procédé selon l'une des revendications 11 ou 12, **caractérisé en ce que** des paramètres de processus et/ou d'installations sont modifiés, à l'aide du navigateur web (6), par le biais des pages web générées par le serveur web.

14. Procédé selon l'une des revendications 11 à 13, **caractérisé en ce que** des quantités de données rédigées dans un langage de balisage sont planifiées par l'utilisateur pour générer les pages web.

15. Procédé selon l'une des revendications 11 à 14, **caractérisé en ce que** la logique de commande est programmée dans un langage de programmation spécifié selon IEC 61131-3, notamment en AWL.

16. Procédé selon l'une des revendications 11 à 15, **caractérisé en ce que** les pages web et/ou les quantités de données rédigées dans le langage de balisage sont formatées en HTML.

17. Procédé selon l'une des revendications 11 à 16, **caractérisé en ce que** le serveur web comprend au moins un module de programme programmé dans un langage de programmation supérieur, notamment en langage C.

18. Procédé selon l'une des revendications 11 à 17, **caractérisé en ce que** des valeurs de processus sont acquises à l'aide d'un premier module de programme (2a) du serveur web et une page web servant à visualiser les valeurs de processus est générée à l'aide d'un second module de programme (2b) du serveur web, le second module de programme (2b) comprenant l'interface (4) vers la logique de commande.

19. Produit programme d'ordinateur comprenant un serveur web pour la génération de pages web et une logique de commande, qui peut être planifiée par un utilisateur, servant à commander un processus (5), notamment dans la technique d'automatisation, le serveur web n'étant pas directement accessible à l'utilisateur et une interface (4) étant prévue entre la logique de commande et le serveur web, interface par le biais de laquelle l'utilisateur peut influencer la génération des pages web en planifiant la logique de commande et qui permet une génération dynamique de pages web à partir de la logique de commande, des pages de brouillon étant prévues et une modification des pages de brouillon se produisant, par réglage de paramètres, au moyen de la logique de commande, et une apparence souhaitée pour les pages web étant ainsi obtenue.
